# EUROPÄISCHE PATENTANMELDUNG

(11) **EP 3 788 858 A1**
(43) Veröffentlichungstag der Anmeldung: **10.03.2021**
(21) Anmeldenummer: 20176769.6
(22) Anmeldetag: 27.05.2020
(51) Int. Cl.: A01D 41/12, B65G 65/46

(54) **ENTLEERVORRICHTUNG FÜR EIN ERNTEGUTAUFNAHMEBEHÄLTNIS EINES LANDWIRTSCHAFTLICHEN FAHRZEUGS**

(30) Priorität: 04.09.2019 DE 102019123623
(71) Anmelder: CLAAS Selbstfahrende Erntemaschinen GmbH, 33428 Harsewinkel (DE)
(72) Erfinder: Claes, Ulrich, 33790 Halle/Westf. (DE)
(74) Vertreter: CLAAS Gruppe

(57) **Zusammenfassung**

Die vorliegende Erfindung betrifft eine Entleervorrichtung (40) für ein Erntegutaufnahmebehältnis (32) eines landwirtschaftlichen Fahrzeugs (10), mit zumindest einer in einem Auslaufrohr (36) drehbar gelagerten, eine Schneckenwindung (44) aufweisenden Förderschnecke (38), wobei an einem gutabgabeseitigen Ende (56) der Schneckenwindung (44) eine Lagerstelle (50) vorgesehen ist, die von einer im Inneren des Auslaufrohres (36) angeordneten Haltevorrichtung (46) aufgenommen ist, wobei dem gutabgabeseitigen Ende (56) der Schneckenwindung (44) eine Räumkante (58) zugeordnet ist, welche benachbart zu der Haltevorrichtung (46) positioniert ist.

## Beschreibung

Die vorliegende Erfindung betrifft eine Entleervorrichtung für ein Erntegutaufnahmebehältnis eines landwirtschaftlichen Fahrzeugs gemäß dem Oberbegriff des Anspruches 1. Weiterhin betrifft die vorliegende Erfindung ein landwirtschaftliches Fahrzeug gemäß dem Oberbegriff des Anspruches 9.

Eine Entleervorrichtung sowie ein landwirtschaftliches Fahrzeug der eingangs genannten Art sind aus der EP 0 938 838 B1 bekannt. Darin ist eine Entleervorrichtung für ein Erntegutaufnahmebehältnis eines Mähdreschers beschrieben. Die Entleervorrichtung ist mit zumindest einer in einem Auslaufrohr drehbar gelagerten, eine Schneckenwindung aufweisenden, Förderschnecke ausgeführt. An einem gutabgabeseitigen Ende der Förderschnecke ist eine Lagerstelle vorgesehen, die von einer im Inneren des Auslaufrohres angeordneten Haltevorrichtung aufgenommen ist. Die Haltevorrichtung umfasst einen hohlzylindrischen Abschnitt zur Aufnahme einer Wälzlageranordnung zur Lagerung der Schneckenwelle der Förderschnecke. Von dem hohlzylindrischen Abschnitt ausgehend erstrecken sich zwei einander gegenüberliegend angeordnete Haltearme in radialer Richtung nach außen, die mit der Innenmantelfläche des Auslaufrohres verbunden sind. Die Haltearme erstrecken sich abschnittsweise in axialer Richtung des hohlzylindrischen Abschnitts. Um dabei dem von der Förderschnecke transportierten Gutstrom einen möglichst geringen Widerstand entgegenzusetzen, weisen die Haltearme eine tragflügelförmige oder stromlinienförmige Außenkontur auf, wodurch sich die Gefahr eines Gutsstaus reduzieren lässt. Dennoch kann es bei einer Förderung von bestimmten Erntegutarten durch die Entleervorrichtung, wie beispielsweise bei der Ernte von Grassamen, aufgrund der spezifischen Eigenschaften des zu fördernden Erntegutes, zu einem Gutstau im Auslaufrohr kommen.

Bei der Grassamenernte werden neben den Grassamen auch Kurzstrohanteile aufgenommen und in dem Erntegutaufnahmebehältnis zwischengespeichert. Da sich das Gemisch aus Grassamen und Kurzstroh unter anderem wegen seines relativ hohen Feuchtigkeitsgehaltes nur sehr schwer fördern lässt, kommt es an Hindernissen entlang der Förderstrecke im Auslaufrohr zu einer Kissenbildung. Die Haltearme im Auslaufrohr stellen ein solches Hindernis dar. Durch die Kompression der Kissen durch nachgefördertes Erntegut kann es zu einem Verbiegen der Schneckenwindung kommen, in dessen Folge es zu einem Ausfall der Entleervorrichtung kommen kann.

Der Erfindung liegt somit die Aufgabe zugrunde, eine Entleervorrichtung der eingangs genannten Art sowie ein landwirtschaftliches Fahrzeug derart weiterzubilden, dass dem Auftreten eines Erntegutstaus im Auslaufrohr entgegengewirkt oder die Gefahr zumindest reduziert wird.

Diese Aufgabe wird erfindungsgemäß durch eine Entleervorrichtung mit den Merkmalen des Anspruches 1 gelöst. Weiterhin wird die Aufgabe durch ein landwirtschaftliches Fahrzeug mit den Merkmalen des Anspruches 9 gelöst.

Vorteilhafte Weiterbildungen sind Gegenstand der Unteransprüche.

Gemäß dem Anspruch 1 wird eine Entleervorrichtung für ein Erntegutaufnahmebehältnis eines landwirtschaftlichen Fahrzeugs vorgeschlagen, mit zumindest einer in einem Auslaufrohr drehbar gelagerten, eine Schneckenwindung aufweisenden Förderschnecke, wobei an einem gutabgabeseitigen Ende der Förderschnecke eine Lagerstelle vorgesehen ist, die von einer im Inneren des Auslaufrohres angeordneten Haltevorrichtung aufgenommen ist, wobei dem gutabgabeseitigen Ende der Schneckenwindung eine Räumkante zugeordnet ist, welche benachbart zu der Haltevorrichtung positioniert ist. Die Räumkante bewirkt, dass eine Kissenbildung des Erntegutes durch das Einklemmen von gefördertem Erntegut im normalerweise vorhandenen geometrischen Keil zwischen der Schneckenwindung und der Haltevorrichtung zumindest weitgehend vermieden wird. Der Begriff geometrischer Keil bezeichnet den Bereich zwischen der Schneckenwindung und der Haltevorrichtung, welcher eingeschlossen wird, wenn das gutabgabeseitige Ende der Schneckenwindung einen sich radial nach außen erstreckenden Abschnitt der Haltevorrichtung passiert. Durch die Räumkante wird sich im geometrischen Keil aufstauendes Erntegut mitgenommen. Mit dem gutabgabeseitigen Ende der Schneckenwindung ist der auf der Schneckenwelle auslaufende Abschnitt der Schneckenwindung bezeichnet, der einer Austrittsöffnung des Auslaufrohres zugewandt ist.

Insbesondere sollte die Räumkante normal zur Drehrichtung der Förderschnecke ausgerichtet sein. Hierdurch lässt sich ein möglichst großer Abstreifeffekt erreichen.

Bevorzugt kann sich die Räumkante ausgehend vom abgabeseitigen Ende der Schneckenwindung abschnittsweise in axialer Richtung der Förderschnecke erstrecken. Hierbei kann sich die Räumkante entlang der Schneckenwelle abschnittsweise in Richtung der Haltevorrichtung erstrecken. Zudem kann sich die Räumkante abschnittsweise in entgegengesetzter Richtung erstrecken, d.h. in von der Haltevorrichtung abgewandter Richtung.

Gemäß einer vorteilhaften Weiterbildung kann die Haltevorrichtung genau einen Haltearm aufweisen. Hierdurch wird die Anzahl der einen Widerstand im Gutstrom darstellenden Bauteile reduziert. Zudem kann dadurch die Klemmneigung von Erntegut zusätzlich reduziert werden.

Bevorzugt kann sich der Haltearm abschnittsweise in axialer Richtung des Auslaufrohres erstrecken. Hierzu kann der Haltearm auf einem hohlzylindrischen Abschnitt der Haltevorrichtung angeordnet sein und sich zumindest abschnittsweise in axialer Richtung des hohlzylindrischen Abschnitts erstrecken. Der hohlzylindrische Abschnitt dient der Aufnahme der Lagerstelle zur Lagerung der Schneckenwelle. Der Haltearm kann als ein längliches, flächiges Bauteil ausgeführt sein.

Dies ist gegenüber einer rein strebenförmigen Ausgestaltung vorteilhaft, um für eine ausreichende mechanische Stabilität der durch die Haltevorrichtung getragenen Lagerstelle zu sorgen.

Dabei kann der Haltearm sich im Bereich der Lagerstelle im Wesentlichen über die axiale Ausdehnung der Lagerstelle erstrecken und in radialer Richtung eine zunehmende axiale Ausdehnung aufweisen. Zur Aufnahme der eine Wälzlageranordnung aufweisenden Lagerstelle ist der hohlzylindrische Abschnitt der Haltevorrichtung vorgesehen, auf dessen äußerer Mantelfläche der Haltearm befestigt ist. Koaxial zu dem hohlzylindrischen Abschnitt kann ein im Wesentlichen bogenförmiger Abschnitt angeordnet sein, welcher an dem sich in axialer Richtung aufweitenden Ende des Haltearmes befestigt ist. Mittels des im Wesentlichen bogenförmigen Abschnitts kann die Haltevorrichtung und mit dieser die in der Lagerstelle gelagerte Förderschnecke an dem Auslaufrohr befestigt werden.

Insbesondere kann der Haltearm entgegen der Drehrichtung der Förderschnecke geneigt angeordnet sein. Durch ein Anstellen des sich abschnittsweise in axialer Richtung erstreckenden Haltearmes entgegen der Drehrichtung der Förderschnecke kann eine Keilwirkung in Drehrichtung verhindert werden. Hierdurch kann dem Auftreten von Gutstauungen entgegengewirkt werden. Bei dieser Anordnung überkreuzen sich eine gedachte axiale Verlängerung der auslaufenden Schneckenwindung und eine gedachte axiale Verlängerung des Haltearmes.

Weiterhin kann der Haltearm gegenüber der Räumkante geneigt angeordnet sein. Durch eine gegen die Räumkante geneigte Anordnung des Halterarmes kann eine zusätzliche Abstreifwirkung erzielt werden, wodurch sich die Klemmneigung des Erntegutes weiter reduzieren lässt.

Die eingangs gestellte Aufgabe wird weiterhin durch ein landwirtschaftliches Fahrzeug mit einem Erntegutaufnahmebehältnis und einer Entleervorrichtung gelöst, die zumindest eine in einem Auslaufrohr gelagerte Förderschnecke aufweist, die während eines Entleervorgangs des Erntegutaufnahmebehältnisses antreibbar ist, wobei die Entleervorrichtung nach einem der Ansprüche 1 bis 9 ausgeführt ist.

Insbesondere kann das Fahrzeug als eine selbstfahrende Erntemaschine oder als ein Überladewagen ausgeführt sein. Besonders bevorzugt kann die selbstfahrende Erntemaschine als ein selbstfahrender Mähdrescher ausgeführt sein.

Die vorliegende Erfindung wird nachstehend anhand eines in den Zeichnungen dargestellten Ausführungsbeispieles näher erläutert.

Es zeigen:
- Fig. 1: eine schematische Darstellung eines landwirtschaftlichen Fahrzeugs;
- Fig. 2: eine perspektivische Ansicht eines gutabgabeseitigen Endes einer Förderschnecke einer Entleervorrichtung;
- Fig. 3: eine schematische Frontalansicht des gutabgabeseitigen Endes der Förderschnecke gemäß Fig. 2;
- Fig. 4: eine schematische Seitenansicht des gutabgabeseitigen Endes der Förderschnecke; und
- Fig. 5: eine schematische Darstellung einer Haltevorrichtung einer Lagerstelle der Förderschnecke.

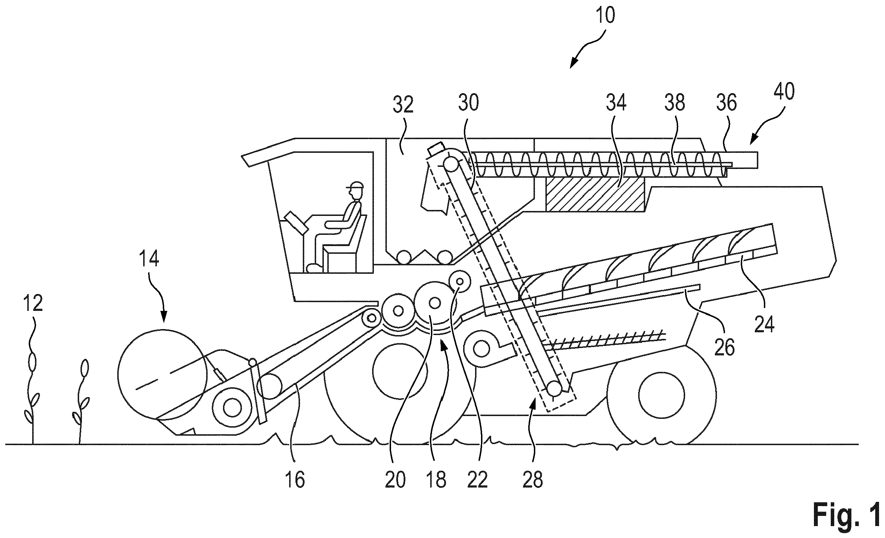

In Fig. 1 ist ein landwirtschaftliches Fahrzeug im Sinne der vorliegenden Erfindung dargestellt, bei dem es sich um eine selbstfahrende Erntemaschine, hier einen Mähdrescher 10, handelt. Das landwirtschaftliche Fahrzeug kann auch als ein Überladewagen ausgeführt sein.

Der Mähdrescher 10 weist zur Aufnahme und Bearbeitung von Erntegut 12 eine Vielzahl von Arbeitsaggregaten auf. Zu den Arbeitsaggregaten zählen bei dem hier dargestellten Mähdrescher 10 ein Schneidwerk 14 zur Aufnahme des Erntegutes 12 und ein mit diesem verbundener Schrägförderer 16 zum Weitertransport des Erntegutes 12 in den Mähdrescher 10. Von dem Schrägförderer 16 wird das Erntegut 12 als Erntegutstrom an eine Drescheinrichtung 18 des Mähdreschers 10 übergeben. Die Drescheinrichtung 18 umfasst zumindest eine Dreschtrommel 20, die abschnittsweise von einem Dreschkorb umschlungen ist. Durch eine Umlenktrommel 22 gelangt der Erntegutstrom in eine als Trennrotor ausgebildete Trenneinrichtung 24 zum Abscheiden von frei beweglichen Körnern des Erntegutstromes in einen unteren Bereich des Mähdreschers 10. Von hier aus gelangt der Erntegutstrom über einen Rücklaufboden 26 zu einer Reinigungsvorrichtung 28, welche Siebböden und ein Gebläse zur Reinigung des Erntegutes umfasst. Die frei beweglichen Körner aus dem Erntegutstrom werden von einer als Kettenförderer ausgebildeten Fördervorrichtung 30 zu einem Erntegutaufnahmebehältnis 32 transportiert.

Der Mähdrescher 10 weist zudem einen als Verbrennungsmotor ausgeführten Antriebsmotor 34 auf, der die zum Betrieb der Arbeitsaggregate und zur Fortbewegung des Mähdreschers 10, beispielsweise mittels eines hydrostatischen Fahrantriebes (nicht dargestellt), benötigte Antriebsleistung bereitstellt. Zum Entleeren des Erntegutaufnahmebehältnisses 32 ist eine Entleervorrichtung 40 mit einem um eine vertikale Achse schwenkbaren Auslaufrohr 36 am Mähdrescher 10 angeordnet. In dem Auslaufrohr 36 ist zumindest eine angetriebene Förderschnecke 38 angeordnet.

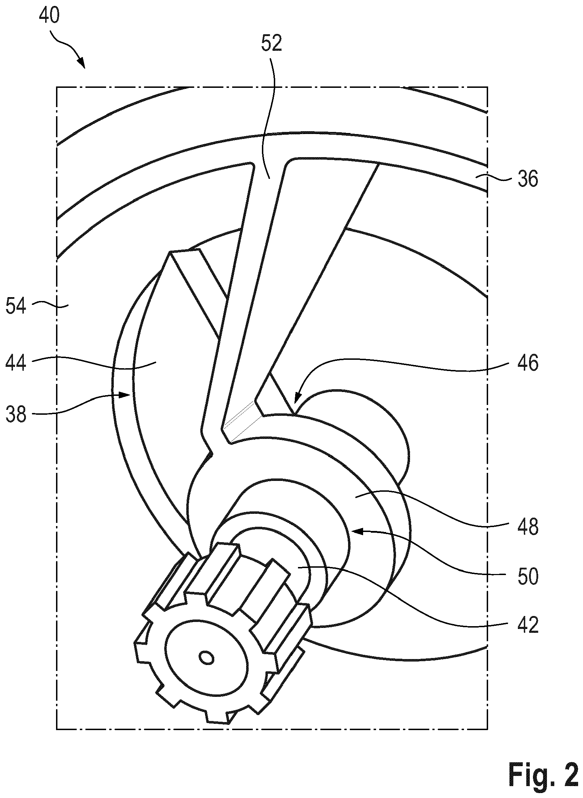

Fig. 2 zeigt eine perspektivische Ansicht eines gutabgabeseitigen Endes der Förderschnecke 38 der Entleervorrichtung 40. Die Förderschnecke 38 weist eine auf einer Schneckenwelle 42 angeordnete Schneckenwindung 44 auf. An dem gutabgabeseitigen Ende der Förderschnecke 38 ist eine Lagerstelle 50 vorgesehen, die von einer Haltevorrichtung 46 aufgenommen ist. Hierbei ist die Schneckenwelle 42 der Förderschnecke 38 endseitig in einem hohlzylindrischen Abschnitt 48 der Haltevorrichtung 46 in der Lagerstelle 50 mittels einer Wälzlageranordnung 62 gelagert. Die Haltevorrichtung 46 umfasst, insbesondere genau, einen Haltearm 52, der sich im Wesentlichen in radialer Richtung zwischen dem hohlzylindrischen Abschnitt 48 und einem bogenförmigen Abschnitt 54 erstreckt. Der bogenförmige Abschnitt 54 ist im Inneren des Auslaufrohres 36 befestigt. Der Abschnitt 54 kann auch als ringförmiger Abschnitt, d.h. in Umfangsrichtung geschlossener Abschnitt, ausgeführt sein.

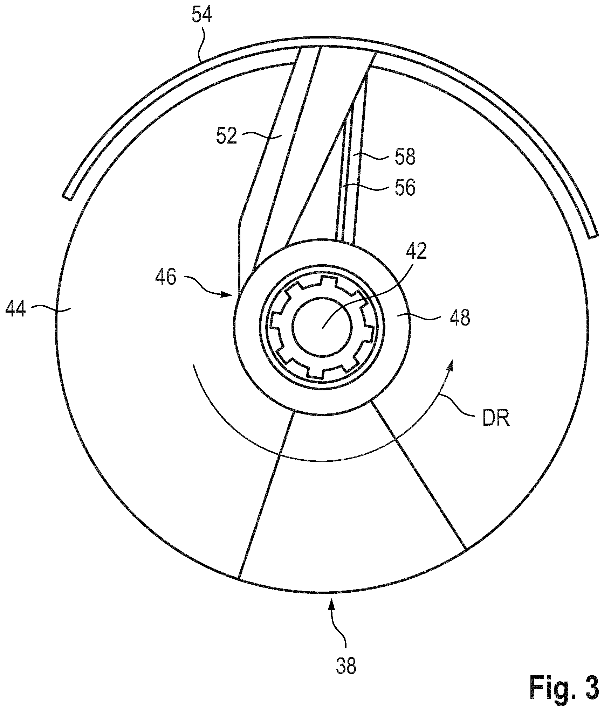

In Fig. 3 ist eine schematische Frontalansicht des gutabgabeseitigen Endes der Förderschnecke 38 gemäß Fig. 2 dargestellt. Die Förderschnecke 38 rotiert beim Entleeren in einer Drehrichtung DR, im dargestellten Ausführungsbeispiel entgegen dem Uhrzeigersinn. Am gutabgabeseitigen Ende 56 der Schneckenwindung 44 ist der Schneckenwindung 44 eine Räumkante 58 zugeordnet. Die Räumkante 58 ist auf der Schneckenwelle 42 angeordnet. Die Räumkante 58 ist normal zur Drehrichtung DR der Förderschnecke 38 ausgerichtet.

Der Haltearm 52 erstreckt sich in axialer Richtung des hohlzylindrischen Abschnitts 48 zumindest abschnittsweise über dessen axiale Ausdehnung. Der Haltearm 52 ist entgegen der Drehrichtung DR der Förderschnecke 38 geneigt zwischen dem hohlzylindrischen Abschnitt 48 und dem bogenförmigen Abschnitt 54 angeordnet. Der Haltearm 52 weist gegenüber der Schneckenwindung 44 eine gegensinnige Steigung auf. Bezüglich der Räumkante 58 weist der Haltearm 52 ebenfalls eine Neigung auf. Der Haltearm 52 ist somit in axialer und radialer Richtung geneigt positioniert. Dabei weist der Haltearm 52 eine abschnittsweise wendeiförmige Kontur auf.

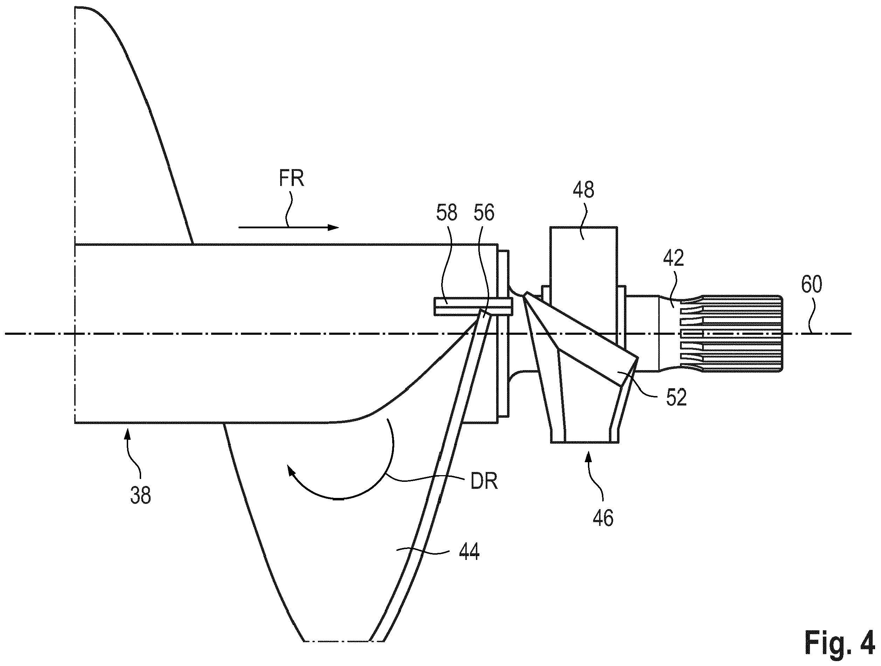

In Fig. 4 ist eine schematische Seitenansicht des gutabgabeseitigen Endes der Förderschnecke 38 dargestellt. Der bogenförmige Abschnitt 54 ist in Fig. 4 nicht dargestellt, um die Form des Haltearmes 52 sichtbar zu machen. Wie aus der Darstellung ersichtlich, weist der Haltearm 52 in radialer Richtung eine zunehmende axiale Ausdehnung auf. Dabei erstreckt sich der Haltearm 52 abschnittsweise seitlich über die axiale Ausdehnung des hohlzylindrischen Abschnitt 48 hinaus.

Die normal zur Längsachse 60 der Förderschnecke 38 orientierte Räumkante 58 erstreckt sich ausgehend vom gutabgabeseitigen Ende 56 der Schneckenwindung 44 abschnittsweise in axialer Richtung der Förderschnecke 38. Die radiale Erstreckung der Räumkante 58 entspricht im Wesentlichen dem Radius der Schneckenwindung 44.

Die Räumkante 58 bewirkt, dass eine Kissenbildung des Erntegutes durch das Einklemmen von gefördertem Erntegut in einem sich normalerweise ausbildenden geometrischen Keil zwischen der Schneckenwindung 44 und dem Haltearm 52 zumindest weitgehend oder vollständig vermieden wird. Der Begriff geometrischen Keil bezeichnet den Bereich zwischen der Schneckenwindung 44 und Haltearm 52 der Haltevorrichtung 46, welcher eingeschlossen wird, wenn das gutabgabeseitige Ende 56 der Schneckenwindung 44 den sich radial nach außen erstreckenden Haltearm 52 passiert. Durch die Räumkante 58 wird sich im geometrischen Keil aufstauendes Erntegut mitgenommen.

Der Haltearm 52 ist entgegen der Schneckenwindung 44 angestellt, wodurch eine Keilbildung beim Passieren des Haltearmes 52 durch die Schneckenwindung 44 vermieden wird. Bei dieser Anordnung überkreuzen sich eine gedachte axiale Verlängerung der auslaufenden Schneckenwindung 44 und eine gedachte axiale Verlängerung des Haltearmes 52. Das der Haltearm 52 zusätzlich gegen die Räumkante 58 angestellt ist, hat neben der Abstreifwirkung den Effekt, dass die Klemmneigung zusätzlich minimiert werden kann.

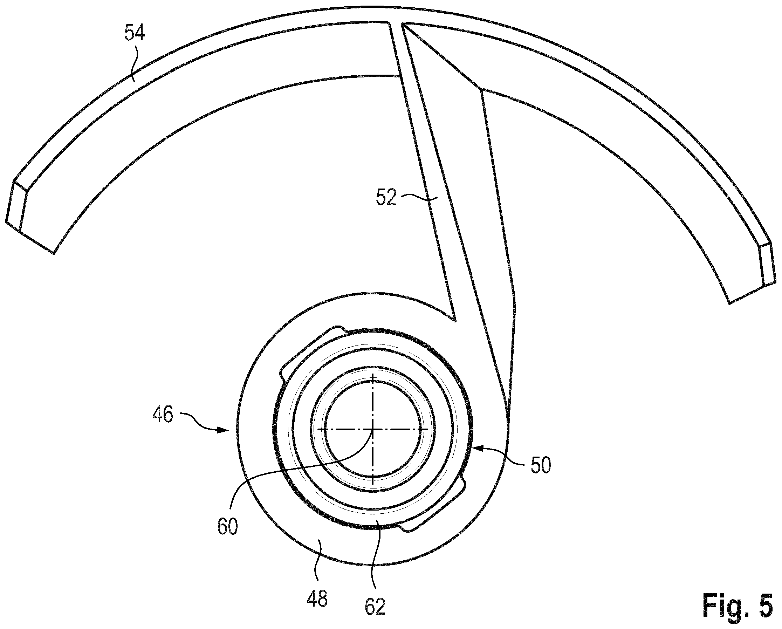

In Fig. 5 ist eine schematische Darstellung nur der Haltevorrichtung 46 der Lagerstelle der Förderschnecke 38 dargestellt. Der Haltearm 52 ist in Umfangsrichtung geneigt auf dem hohlzylindrischen Abschnitt 48 angeordnet. Zusätzlich ist der Haltearm in axialer Richtung zur Längsachse 60 geneigt. Der Haltearm 52 ist somit in zwei Dimensionen zu der Räumkante 58 geneigt positioniert.

### Bezugszeichenliste

- 10: Mähdrescher
- 12: Erntegut
- 14: Schneidwerk
- 16: Schrägförderer
- 18: Drescheinrichtung
- 20: Dreschtrommel
- 22: Umlenktrommel
- 24: Trenneinrichtung
- 26: Rücklaufboden
- 28: Reinigungsvorrichtung
- 30: Fördervorrichtung
- 32: Erntegutaufnahmebehältnis
- 34: Antriebsmotor
- 36: Auslaufrohr
- 38: Förderschnecke
- 40: Entleervorrichtung
- 42: Schneckenwelle
- 44: Schneckenwindung
- 46: Haltevorrichtung
- 48: Hohlzylindrischer Abschnitt
- 50: Lagerstelle
- 52: Haltearm
- 54: Bogenförmiger Abschnitt
- 56: Gutabgabeseitiges Ende von 44
- 58: Räumkante
- 60: Längsachse
- 62: Wälzlageranordnung

## Patentansprüche

1. Entleervorrichtung (40) für ein Erntegutaufnahmebehältnis (32) eines landwirtschaftlichen Fahrzeugs (10), mit zumindest einer in einem Auslaufrohr (36) drehbar gelagerten, eine Schneckenwindung (44) aufweisenden Förderschnecke (38), wobei an einem gutabgabeseitigen Ende (56) der Schneckenwindung (44) eine Lagerstelle (50) vorgesehen ist, die von einer im Inneren des Auslaufrohres (36) angeordneten Haltevorrichtung (46) aufgenommen ist, **dadurch gekennzeichnet, dass** dem gutabgabeseitigen Ende (56) der Schneckenwindung (44) eine Räumkante (58) zugeordnet ist, welche benachbart zu der Haltevorrichtung (46) positioniert ist.

2. Entleervorrichtung (40) nach Anspruch 1, **dadurch gekennzeichnet, dass** die Räumkante (58) normal zur Drehrichtung (DR) der Förderschnecke (38) ausgerichtet ist.

3. Entleervorrichtung (40) nach Anspruch 1 oder 2, **dadurch gekennzeichnet, dass** sich die Räumkante (58) ausgehend vom gutabgabeseitigen Ende (56) der Schneckenwindung (44) abschnittsweise in axialer Richtung der Förderschnecke (38) erstreckt.

4. Entleervorrichtung (40) nach einem der Ansprüche 1 bis 3, **dadurch gekennzeichnet, dass** die Haltevorrichtung (46) genau einen Haltearm (52) umfasst.

5. Entleervorrichtung (40) nach Anspruch 4, **dadurch gekennzeichnet, dass** sich der Haltearm (52) abschnittsweise in axialer Richtung des Auslaufrohres (36) erstreckt.

6. Entleervorrichtung (40) nach Anspruch 4 oder 5, **dadurch gekennzeichnet, dass** sich der Haltearm (52) im Bereich der Lagerstelle (50) im Wesentlichen über die axiale Ausdehnung der Lagerstelle (50) erstreckt und in radialer Richtung eine zunehmende axiale Ausdehnung aufweist.

7. Entleervorrichtung (40) nach einem der Ansprüche 4 bis 6, **dadurch gekennzeichnet, dass** der Haltearm (52) entgegen der Drehrichtung (DR) der Förderschnecke (38) geneigt angeordnet ist.

8. Entleervorrichtung (40) nach einem der Ansprüche 4 bis 7, **dadurch gekennzeichnet, dass** der Haltearm (52) gegenüber der Räumkante (58) geneigt angeordnet ist.

9. Landwirtschaftliches Fahrzeug (10) mit einem Erntegutaufnahmebehältnis (32) und einer Entleervorrichtung (40), die zumindest eine in einem Auslaufrohr (36) gelagerte Förderschnecke (38) aufweist, die während eines Entleervorgangs des Erntegutaufnahmebehältnisses (32) antreibbar ist, **dadurch gekennzeichnet, dass** die Entleervorrichtung (40) nach einem der Ansprüche 1 bis 9 ausgeführt ist.

10. Landwirtschaftliches Fahrzeug (10) nach Anspruch 9, **dadurch gekennzeichnet, dass** das Fahrzeug als eine selbstfahrende Erntemaschine (10) oder als ein Überladewagen ausgeführt ist.
